# EUROPÄISCHE PATENTSCHRIFT

(11) **EP 1 031 457 B1**
(45) Veröffentlichungstag und Bekanntmachung des Hinweises auf die Patenterteilung: **06.04.2005**
(21) Anmeldenummer: 00101220.2
(22) Anmeldetag: 21.01.2000
(51) Int. Cl.: B60N 2/02

(54) **Bedienanordnung zur Einstellung der Sitzstellung**
Operating arrangement for adjusting a seat position
Agencement de commande pour le réglage de la position d'un siège

(30) Priorität: 25.02.1999 DE 19908129
(43) Veröffentlichungstag der Anmeldung: 30.08.2000
(73) Patentinhaber: Volkswagen Aktiengesellschaft, 38436 Wolfsburg (DE)
(72) Erfinder: Koch, Sven, 38118 Braunschweig (DE); Bischoff, Klaus, 38173 Evessen (DE); Wollenhaupt, Ralf, 38350 Helmstedt (DE)

(56) Entgegenhaltungen:
- WO-A-97/42050
- DE-A- 3 148 724
- DE-A- 3 609 690
- DE-A- 4 132 499
- DE-A- 19 622 256
- DE-C- 3 933 561
- FR-A- 2 696 384

## Beschreibung

Die Erfindung betrifft eine Bedienanordnung zur Einstellung der Sitzstellung bzw. Sitzkontur bei Kraftfahrzeugen, wobei über Schaltelemente Stellmittel betätigbar sind, über welche die Sitzstellung und/oder die Sitzkontur veränderbar ist, gemäß Oberbegriff des Patentanspruches 1 (siehe z.B. WO-A-97/42050).

Die elektrische Verstellbarkeit der Fahrzeugsitze ist in der Anwendung bei Kraftfahrzeugen vielfach bekannt. Die Anpassung des Fahrzeugsitzes an die entsprechende Person ist insbesondere im Hinblick auf die genaue Fahrerpositionierung ohnehin wichtig. Jeder Fahrzeugführer ist gehalten, eine entsprechende Sitzposition einzunehmen, in welcher er das Fahrzeug sicher handhaben kann.

Ein weiterer Aspekt der mit der Sitzeinstellung korrespondiert, ist die Einstellung der Spiegel bzw. die gute Einsichtnahmemöglichkeit möglicherweise entsprechender Monitore. Im übrigen braucht der Fahrzeugführer eine freie Sicht nach vorne, aber auch zur Seite und nach hinten, darüber hinaus auch eine gute Sicht und Zugänglichkeit zu allen Armaturen. Die Sitzposition spielt überdies eine besondere Rolle bei der Anwendung der Sicherheitssysteme, wie Gurtstraffer, Airbag und dgl. mehr. Hierbei spielt die Sitzpositionsermittlung generell auch eine besondere Rolle.

Ein weiterer Aspekt der durchaus auch sicherheitstechnische Aspekte nach sich zieht, ist eine bequeme Sitzposition, in welcher insbesondere der Fahrzeugführer beispielsweise auf längeren Fahrten nicht ermüdet.

Des weiteren gilt sowohl in sicherheitstechnischer Hinsicht, als auch aus Komfortgründen das gleiche für die übrigen Fahrzeuginsassen. Auch hierbei korrespondieren Sicherheitssysteme beispielsweise auch für die Fondsitze mit der jeweiligen Sitzposition.

Aus dem Stand der Technik ist die Befassung mit der Verstellbarkeit der Sitzposition in Kraftfahrzeugen vielfach bekannt. Für die Verstellung der Sitze sind Schalt- bzw. Bedienelemente oder Bedienanordnungen notwendig, die in verschiedenster Weise positioniert und ausgestaltet werden können.

Aus der US 5523664 ist eine Schalt-/Bedieneinheit zur Sitzteilverstellung bekannt, die seitlich am Sitz unten angeordnet ist. Weitere Schaltelemente, wie beispielsweise für die Sitzheizung sind ebenfalls seitlich unten am Fahrersitz angeordnet. Nachteilig ist hierbei, dass sich die Schaltelemente nicht im Blickfeld des Benutzers insbesondere des Fahrzeugführers befinden, so dass er die Schaltelemente entweder ertasten muss oder aber dabei seine Sitzposition verändern muss, d. h. nach vorne beugen muss, um eine Einstellung vorzunehmen. Dabei verlässt er wieder seine persönliche, optimale Sitzposition, so dass neben dem Nachteil der schlechten Zugänglichkeit, noch der Nachteil hinzukommt, dass er kaum eine optimale Einstellung des Sitzes finden kann, da er während der Einstellung durch einen langreichweitigen Griff seitlich nach unten seine optimale Sitzposition verlassen muss.

Aus der US 4833614 ist eine Verstellmöglichkeit bekannt, bei welche die Steuerung der Sitzverstellung über ein an einem Monitor aufzurufendes Menü erfolgt. Eine solche Darstellung ist jedoch für die Einbringung in einem Kraftfahrzeug insbesondere für den Fahrzeugführer zu stark ablenkend und daher sicherheitstechnisch von großem Nachteil. Die Menüführung ist dabei so kompliziert, dass dies zu einer erheblichen Ablenkung des Fahrzeugführers vom üblichen Verkehrsgeschehen führt. Dies wiederum führt zu einer unakzeptablen Gefährdung.

Aus der o.g. WO-A-97/42050 ist ein Bedienungssystem für einen mehrgliedrigen Sitz eines Kraftfahrzeugs bekannt. Dabei sind die einzelnen Bestandteile des Sitzes durch mehrere Kippschalter, die in einem Schaltermodul vereint sind, verstellbar. Darüber hinaus sind in dem Schaltermodul Speichertasten vorgesehen, um bestimmte Sitzstellungen abzuspeichern. Die zentralen Datenverarbeitungseinheiten für die Betätigung mehrere Sitze können zusammengeschaltet werden, damit die Sitze synchron betätigt werden können. Ein ähnliches Schaltermodul zur Betätigung der einzelnen Komponenten eines Sitzes sind aus der FR-A-2-696384 bekannt. Das dort beschrieben Schaltermodul weist auch Bedientasten für die Sitzheizung und andere Funktionen auf.

Neben der Verstellmöglichkeit der Fahrzeugsitze enthalten viele Fahrzeugsitze eine integrierte Sitzheizung. Diese ist zweckmäßig und komfortabel, insbesondere bei Fahrten in kalten Jahreszeiten. Eine Sitzheizung kann auch in Abhängigkeit zum gewählten Sitzbezug zweckmäßig sein. Dies gilt insbesondere bei der Wahl von Leder als Sitzmaterial, welches unbeheizt, insbesondere in der kalten Jahreszeit unangenehm sein kann.

Außerdem steigert eine Sitzheizung das Wohlbefinden des Fahrzeugführers und entspannt im übrigen auch auf längeren Fahrten bei kurzweiliger Betätigung die durch das Sitzen angestrengte Muskulatur.

Somit soll auch die Sitzheizung den Komfort der Fahrzeugsitze erhöhen, was auch für die günstige Positionierung entsprechender Schalter für die Sitzheizung gilt.

So ist aus der DE 41 41 062 bekannt, verschiedene Heizstufen für die Sitzheizung vorzusehen, welche in diesem genannten Falle sogar abhängig von der Raumtemperatur geregelt werden. Eine solche Sitzheizung ist dabei relativ aufwendig und bedarf einer entsprechenden auch aufwendig gestalteten Temperaturführung, die unter Umständen auch kompliziert "beschaltet" werden muß.

Aus der US 5 626 021 ist bekannt, die Sitzheizung in Zonen einzuteilen und die Temperatur dort verwendeter Peltierelemente einzeln zu steuern und gesondert zu regeln. Eine solche Vorgehensweise ist sehr aufwendig und bedarf auch einer entsprechenden Vorsehung verschiedenster Schalter und Schaltelemente. Dies kann bei entsprechend ungünstiger Positionierung zu einer übergebührigen Ablenkung des Fahrzeugführers vom Fahrgeschehen führen.

Der Erfindung liegt somit die Aufgabe zugrunde, eine gattungsgemäße Bedienanordnung zur Einstellung der Sitzstellung bzw. Sitzkontur bei Kraftfahrzeugen dahingehend weiterzuentwickeln, daß eine kompakte, übersichtliche und logisch einfach zu bedienende Schaltgruppe für Sitzschalter entsteht.

Die gestellte Aufgabe ist bei einer Bedienanordnung der gattungsgemäßen Art erfindungsgemäß durch die kennzeichnenden Merkmale des Patentanspruches 1 gelöst.

Vorteilhafte Ausgestaltungen der Erfindung sind in den übrigen abhängigen Ansprüchen 2 bis 12 angegeben.

Wesentlich bei der Erfindung ist, daß die Sitzverstellungsschalter zumindest zweier direkt nebeneinander angeordneter Sitze in einer zusammengefaßte gemeinsamen Schalterbaugruppe oder in zumindest zwei benachbarten bzw. nebeneinander liegenden Schalterbaugruppen angeordnet sind.

Nach einer Weiterbildung der Erfindung ist jeweils ein Sitzheizungsbedienelement bezogen auf jeden Sitz und/oder Bedienelemente bezogen auf jeden Sitz für Memory-Schaltfunktionen in direkter Nähe zu den Sitzverstellbedienelementen angeordnet.

Hierdurch ist zum einen eine logische Zuordnung des Sitzheizungsschalters und/oder der Bedienelemente für Memory-Schaltfunktionen gegeben, die selbsterklärend ist und insbesondere den Fahrzeugführer nicht nennenswert vom Fahrgeschehen ablenkt.

Außerdem besteht die Möglichkeit, die Sitzheizungsbedienelemente und/oder die Bedienelemente für die Memory-Schaltfunktionen in die Schalterbaugruppe der Sitzverstellbedienelemente zu integrieren.

Dadurch entsteht eine kompakte, insgesamt sehr übersichtliche Schaltgruppe, die alle auf den Sitz bzw. den jeweiligen Sitz bezogenen Schalterelemente enthält.

In weiterer vorteilhafter Ausgestaltung ist das Sitzheizungsbedienelement ein Potentiometer, welches zur stufenlosen Regelung der Sitzheizungstemperatur vorgesehen ist. Hierdurch ist eine optimale Anpassung der gewünschten Temperatur möglich und nicht nur die einfache Schaltmöglichkeit Heizung ein oder Heizung aus.

Eine bevorzugte Ausgestaltung der erfindungsgemäßen Bedienanordnung sieht vor, daß die Schalterbaugruppe eine Grundplatte, vorzugsweise aus Holz, mit Durchbrüchen für die Schaltelementachsen aufweist, auf welcher die einzelnen Bedienelemente befestigbar sind. Die Grundplatte ist dabei in einen Rahmen einsetzbar, der sich über die Grundplatte erhebt. Vorzugsweise ist die Höhe des Rahmens so gewählt, daß die Oberfläche, der auf der Grundplatte befestigten Bedienelemente im wesentlichen eine Ebene mit dem Rahmen bildet.

Die vorgesehenen Bedienelemente können aus unterschiedlichsten Materialien bestehen bzw. Beschichtungen, vorzugsweise aus Metall, aufweisen.

Nach einer bevorzugten Ausbildung der erfindungsgemäßen Bedienanordnung ist die Schalterbaugruppe segmentiert zumindest auf einer Anzeigeeinrichtung dargestellt, wobei die Bedienelemente der Schalterbaugruppe Touch-Screen-Schaltfunktionen aufweisen.

Vorteilhaft ist die für zumindest jeweils zwei nebeneinander angeordnete Sitze zusammenhängende Schaltergruppe zwischen denselben angeordnet. Dabei ist es vorteilhaft, dieselbe mittig in der Armaturentafel oder im Armaturentafelbereicht derart anzuordnen, daß sie im haptischen Bereich beider Fahrzeugsitze bzw. der Person beider Fahrzeugsitze angeordnet sind. Hierdurch wird trotz der Zusammenfassung der beiden Schaltergruppen für zwei Sitze eine gute Zugänglichkeit für beide Personen der beiden Fahrzeugsitze gewährleistet.

Nachfolgend wird die erfindungsgemäße Bedienanordnung anhand zweier Ausführungsbeispiele näher beschrieben: Die zugehörigen Zeichnungen zeigen
Fig. 1 eine Variante der erfindungsgemäßen Bedienanordnung und
Fig. 2 eine weitere Variante der erfindungsgemäßen Bedienanordnung.

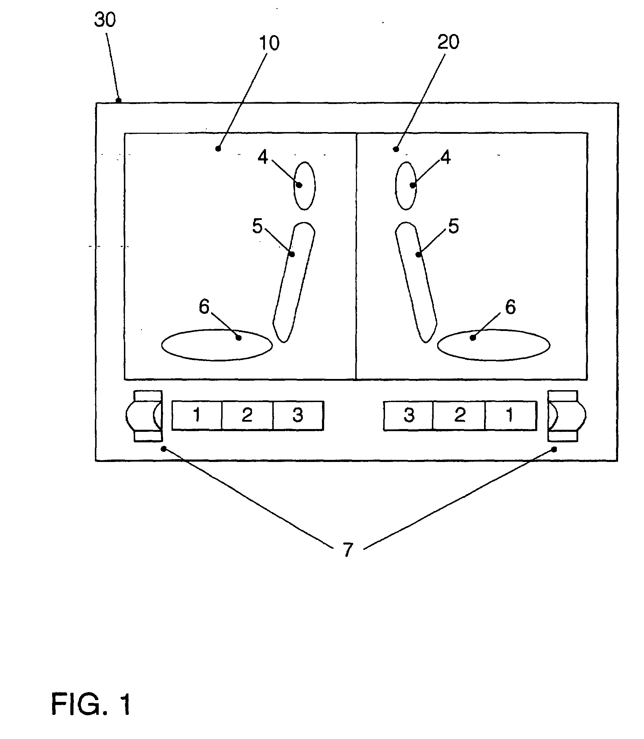

Die Figur 1 zeigt ein Ausführungsbeispiel, bei welchem die Bedienelemente 4, 5; 6 ... für die Sitzverstellung auf einer Anzeigeeinrichtung 10, 20 dargestellt sind. Um die Handhabung der Bedienelemente 4, 5, 6 für den Benutzer zu erleichtern, erfolgt die Anordnung der Bedienelemente zueinander in Form einer Sitzkontur. Eine solche Anordnung ist zum Beispiel aus der DE 39 33 561 C1 bekannt.

Die Bedienelemente 4, 5, 6, ... weisen dabei Touch-Screen-Schaltfunktionen auf, wodurch es dem Benutzer durch Antippen des jeweiligen Bedienelementes 4, 5, 6 möglich ist, den Sitz auf gewünschte Weise zu verstellen.

Des weiteren sind unterhalb der Anzeigeeinrichtung 10, 20 in der gemeinsamen Schalterbaugruppe 30 in haptischer Nähe und in Bezug zu den den jeweiligen Sitz symbolisierenden Bedienelementen 4, 5, 6 ... mechanische Bedienelemente 7 für die Sitzheizung sowie Memory-Schalter 1, 2, 3 für die Sitzverstellung angeordnet. Es ist dabei auch denkbar, daß die Memory-Schalter 1, 2, 3 auch weitere Schaltpositionen bspw. der Sitzheizung oder der Spiegelverstellung des Kraftfahrzeuges beinhalten.

Die Abbildung zeigt zwei Bedienelemente 4, 5, 6 ... in einer Einheit 30, wobei jeweils eine dem jeweiligen Sitz zugeordnet ist. Bei zwei nebeneinander angeordneten Sitzen ist es zweckmäßig und erfindungsgemäß auch vorgesehen, mit entsprechend spiegelverkehrter Anordnung eine zweite Schalterbaugruppe daneben anzuordnen, so daß die gesamte Schaltgruppe paarig ausgelegt ist.

In beiden Fällen gilt natürlich eine entsprechende Anordnung des Sitzheizungsbedienelementes 7 und/oder der Memory-Schalter 1, 2, 3 in der Nähe der Bedienelemente 4, 5, 6, die dem jeweilig abgebildeten Fahrzeugsitz zugewiesen sind.

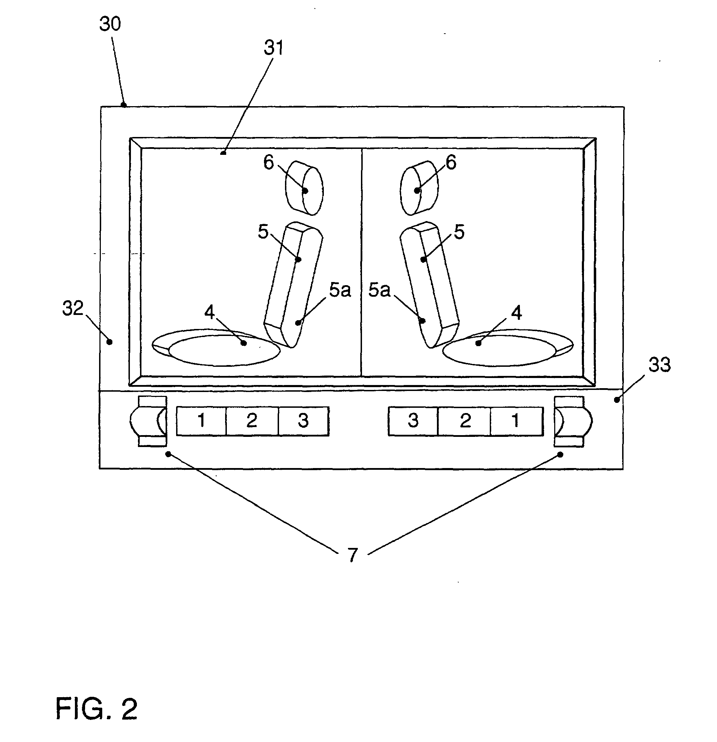

Die in Fig. 2 gezeigte Bedienanordnung besteht aus zwei Schalterbaugruppen 30 und 33. Die Schalterbaugruppe 30 umfaßt eine Grundplatte 31, welche Durchbrüche für die Achsen der nicht dargestellten Schalterelemente zur Betätigung der Sitzverstelleinrichtungen aufweist.

Die jeweiligen mechanisch betätigbaren Sitzverstell-Bedienelemente 4, 5, 6 werden aufgeclipst, wobei die dargestellten Bedienelemente nur exemplarisch angegeben sind, weitere Bedienelemente sind denkbar.

Die Grundplatte 31 selbst ist in einen Rahmen 32 versenkt eingesetzt, wobei im Ausführungsbeispiel die Höhe des Rahmens 32 so gewählt ist, daß er mit dem Bedienelement 4, 5, 6 eine Ebene bildet.

Die Bedienelemente 4, 5, 6 sind metallisch beschichtet und weisen eine vercromte Kontur 5a auf, welche exemplarisch am Bedienelement 5 gezeigt ist.

Benachbart zur Schaltergruppe 30 ist eine weitere Schaltergruppe 33 angeordnet, welche die mechanisch betätigbaren Bedienelemente 1, 2, 3 und 7 für Memory-Funktionen und Sitzheizung umfaßt.

Die Bedienelemente 1, 2, 3 und 7 sind dabei so in der Schalterbaugruppe 33 plaziert, daß sie eine logische Nähe zu den Sitzverstell-Bedienelementen 4, 5, 6 des jeweiligen Sitzes aufweisen.

## Patentansprüche

1. Bedienanordnung mit Bedienelementen zur Einstellung der Sitzstellung bzw. Sitzkontur bei Kraftfahrzeugen, wobei über Schaltelemente Stellmittel betätigbar sind, über welche die Sitzstellung und/oder die Sitzkontur veränderbar ist,
**dadurch gekennzeichnet, dass**
erste Sitzverstellbedienelemente (4, 5, 6), die einem ersten Sitz zugeordnet sind, und zumindest zweite Sitzverstellbedienelemente (4, 5, 6), die einem zweiten Sitz zugeordnet sind, in einer Schalterbaugruppe (30) oder in zumindest zwei benachbarten Schalterbaugruppen angeordnet sind, wobei die beiden Sitze nebeneinander angeordnet sind, wobei die ersten und die zweiten Sitzverstellbedienelemente (4, 5, 6) jeweils so angeordnet sind, dass sich die Form einer Sitzkontur ergibt.

2. Bedienanordnung nach Anspruch 1,
**dadurch gekennzeichnet, daß**
jeweils ein Sitzheizungsbedienelement (7) bezogen auf jeden Sitz in direkter haptischer Nähe zu den Bedienelementen (4, 5, 6 ...) angeordnet ist.

3. Bedienanordnung nach Anspruch 1 oder 2,
**dadurch gekennzeichnet, daß**
jeweils Bedienelemente (1, 2, 3) für Memory-Schaltfunktionen bezogen auf jeden Sitz in direkter haptischer Nähe zu den Sitzverstellbedienelementen (4, 5, 6 ...) angeordnet sind.

4. Bedienanordnung nach Anspruch 2 oder 3,
**dadurch gekennzeichnet, daß**
die Sitzheizungsbedienelemente (7) und/oder die Bedienelemente (1, 2, 3) für Memory-Schaltfunktionen in einer Schalterbaugruppe (33) angeordnet sind.

5. Bedienanordnung nach Anspruch 2 oder 3,
**dadurch gekennzeichnet, daß**
die Sitzheizungsbedienelemente (7) und/oder die Bedienelemente (1, 2, 3) für die Memory-Schaltfunktionen in die Schalterbaugruppe (30) integriert angeordnet sind.

6. Bedienanordnung nach einem oder Ansprüche 1 bis 5,
**dadurch gekennzeichnet, daß**
die Schalterbaugruppe (30) eine Grundplatte (31) mit Durchbrüchen für die Schaltelementachsen aufweist, auf welcher die Bedienelemente befestigbar sind.

7. Bedienanordnung nach Anspruch 6,
**dadurch gekennzeichnet, daß**
die Grundplatte in einen Rahmen (32) einsetzbar ist, welcher sich haptisch über der Grundplatte (31) erhebt.

8. Bedienanordnung nach Anspruch 7,
**dadurch gekennzeichnet, daß**
zumindest die Oberfläche der Bedienelemente (4, 5, 6 ...) im wesentlichen eine Ebene mit dem Rahmen (32) bildet.

9. Bedienanordnung nach einem der Ansprüche 1 bis 8,
**dadurch gekennzeichnet, daß**
zumindest die Bedienelemente (4, 5, 6 ...) eine metallische Beschichtung aufweisen.

10. Bedienanordnung nach einem der Ansprüche 1 bis 5,
**dadurch gekennzeichnet, daß**
zumindest eine der Schalterbaugruppen (30, 33) über eine Bildschirmdarstellung (10, 20) realisierbar ist, wobei die jeweiligen Bedienelemente (1 bis 7) Touch-Screen-Schaltfunktionen aufweisen.

11. Bedienanordnung nach einem der Ansprüche 1 bis 10,
**dadurch gekennzeichnet, daß**
die Schalterbaugruppe (30 und/oder 33) für zwei nebeneinander angeordnete Sitze räumlich zwischen denselben angeordnet ist.

12. Bedienanordnung nach einem der vorherigen Ansprüche,
**dadurch gekennzeichnet, daß**
zumindest die Schaltergruppe (30) für zwei nebeneinander angeordnete Sitze mittig im Armaturentafelbereich derart angeordnet ist, daß sie im haptischen Bereich beider Fahrzeugsitze angeordnet ist.

## Claims

1. Operating arrangement with operating elements for adjusting the seat position or seat contour in motor vehicles, it being possible to use switching elements to actuate adjusting means via which the seat position and/or the seat contour can be changed, **characterized in that** first seat-adjustment operating elements (4, 5, 6), which are assigned to a first seat, and at least second seat-adjustment operating elements (4, 5, 6), which are assigned to a second seat, are arranged in a switch subassembly (30) or in at least two adjacent switch subassemblies, the two seats being arranged next to each other, the first and the second seat-adjustment operating elements (4, 5, 6) being arranged in each case in such a manner that a seat contour shape is produced.

2. Operating arrangement according to Claim 1, **characterized in that** a respective seat-heating operating element (7) is arranged, with reference to each seat, in the direct haptic vicinity of the operating elements (4, 5, 6 ...).

3. Operating arrangement according to Claim 1 or 2, **characterized in that** respective operating elements (1, 2, 3) for memory switching functions are arranged, with reference to each seat, in the direct haptic vicinity of the seat-adjusting operating elements (4, 5, 6 ...).

4. Operating arrangement according to Claim 2 or 3, **characterized in that** the seat-heating operating elements (7) and/or the operating elements (1, 2, 3) for memory switching functions are arranged in a switch subassembly (33).

5. Operating arrangement according to Claim 2 or 3, **characterized in that** the seat-heating operating elements (7) and/or the operating elements (1, 2, 3) for the memory switching functions are integrated into the switch subassembly (30).

6. Operating arrangement according to one of Claims 1 to 5, **characterized in that** the switch subassembly (30) has a base plate (31) with apertures for the switching-element spindles, on which base plate the operating elements can be fastened.

7. Operating arrangement according to Claim 6, **characterized in that** the base plate can be inserted into a frame (32) which is raised haptically above the base plate (31).

8. Operating arrangement according to Claim 7, **characterized in that** at least the surface of the operating elements (4, 5, 6 ...) essentially forms one plane with the frame (32).

9. Operating arrangement according to one of Claims 1 to 8, **characterized in that** at least the operating elements (4, 5, 6 ...) have a metallic coating.

10. Operating arrangement according to one of Claims 1 to 5, **characterized in that** at least one of the switch subassemblies (30, 33) can be realized via an on-screen display (10, 20), the respective operating elements (1 to 7) having touch-screen switching functions.

11. Operating arrangement according to one of Claims 1 to 10, **characterized in that** the switch subassembly (30 and/or 33) for two seats arranged next to each other is arranged physically between them.

12. Operating arrangement according to one of the preceding claims, **characterized in that** at least the switch subassembly (30) for two seats arranged next to each other is arranged centrally in the dashboard region in such a manner that it is arranged in the haptic region of both vehicle seats.

## Revendications

1. Agencement de commande avec des éléments de commande pour le réglage de la position d'un siège
ou du contour d'un siège sur des véhicules automobiles, des moyens de réglage pouvant être actionnés par des éléments de commutation, moyens par lesquels la position d'un siège et/ou le contour d'un siège peut être modifié (e),
**caractérisé en ce que**
des premiers éléments de commande de réglage de siège (4, 5, 6), qui sont attribués à un premier siège, et au moins des seconds éléments de commande de réglage de siège (4, 5, 6), qui sont disposés dans un second siège, sont disposés dans un ensemble commutateur (30) ou dans au moins deux ensembles commutateurs voisins, les deux sièges étant disposés l'un à côté de l'autre, les premiers et les seconds éléments de commande de réglage de siège (4, 5, 6) étant disposés respectivement de telle sorte qu'on obtient la forme d'un contour de siège.

2. Agencement de commande selon la revendication 1,
**caractérisé en ce que**
à chaque fois un élément de commande de chauffage de siège (7) est disposé par rapport à chaque siège à proximité de contact direct des éléments de commande (4, 5, 6 ...)

3. Agencement de commande selon la revendication 1 ou 2,
**caractérisé en ce que**
à chaque fois des éléments de commande (1, 2, 3) pour des fonctions de commutation à mémoire sont disposés par rapport à chaque siège à proximité de contact direct des éléments de commande de réglage de siège (4, 5, 6 ...).

4. Agencement de commande selon la revendication 2 ou 3,
**caractérisé en ce que**
les éléments de commande de chauffage de siège (7) et/ou les éléments de commande (1, 2, 3) pour des fonctions de commutation à mémoire sont disposés dans un ensemble commutateur (33).

5. Agencement de commande selon la revendication 2 ou 3,
**caractérisé en ce que**
les éléments de commande de chauffage de siège (7) et/ou les éléments de commande (1, 2, 3) pour les fonctions de commutation à mémoire sont disposés de façon intégrée dans l'ensemble commutateur (30).

6. Agencement de commande selon l'une quelconque des revendications 1 à 5,
**caractérisé en ce que**
l'ensemble commutateur (30) présente une plaque de base (31) avec des passages pour les axes d'éléments de commutation sur laquelle les éléments de commande peuvent être fixés.

7. Agencement de commande selon la revendication 6,
**caractérisé en ce que**
la plaque de base peut être insérée dans un cadre (32) qui se soulève de façon tactile au-dessus de la plaque de base (31).

8. Agencement de commande selon la revendication 7,
**caractérisé en ce que**
au moins la surface des éléments de commande (4, 5, 6 ...) forme sensiblement un plan avec le cadre (32).

9. Agencement de commande selon l'une quelconque des revendications 1 à 8,
**caractérisé en ce que**
au moins les éléments de commande (4, 5, 6 ...) présentent un revêtement métallique.

10. Agencement de commande selon l'une quelconque des revendications 1 à 5,
**caractérisé en ce que**
au moins l'un des ensembles commutateurs (30, 33) peut être réalisé au moyen d'une représentation sur écran (10, 20), les éléments de commande (1 à 7) concernés présentant des fonctions de commutation à écran tactile.

11. Agencement commande selon l'une quelconque des revendications 1 à 10,
**caractérisé en ce que**
l'ensemble commutateur (30 et/ou 33) pour deux sièges disposés l'un à côté de l'autre est disposé dans l'espace entre ces mêmes sièges.

12. Agencement de commande selon l'une quelconque des revendications précédentes,
**caractérisé en ce que**
au moins l'ensemble commutateur (30) pour deux sièges disposés l'un à côté de l'autre est disposé au centre dans la zone du tableau de bord de telle sorte qu'il est disposé dans la zone de contact tactile des deux sièges du véhicule.
